# EUROPEAN PATENT SPECIFICATION

(11) **EP 2 565 156 B1**
(45) Date of publication and mention of the grant of the patent: **23.01.2019**
(21) Application number: 11774874.9
(22) Date of filing: 19.04.2011
(51) Int. Cl.: C01B 11/04, A61L 9/01, A61L 9/14, B01J 39/00, C02F 1/42, C02F 1/50, C02F 1/76

(54) **METHOD FOR PRODUCTION OF WEAKLY ACIDIC HYPOCHLOROUS ACID**
VERFAHREN ZUR HERSTELLUNG VON SCHWACH SAURER HYPOCHLORSÄURE
PROCÉDÉ POUR PRODUIRE DE L'ACIDE HYPOCHLOREUX FAIBLEMENT ACIDE

(30) Priority: 26.04.2010 WO PCT/JP2010/057333
(43) Date of publication of application: 06.03.2013
(73) Proprietor: Evatech Corporation, Tama-shi, Tokyo 206-0002 (JP)
(72) Inventor: MAKINO, Kazunori, Fuchu-shi Tokyo 183-0036 (JP); TERADA, Minoru, Tama-shi Tokyo 206-0033 (JP)
(74) Representative: Maschio, Antonio
(86) International application number: PCT/JP2011/059641
(87) International publication number: WO 2011/136091

(56) References cited:
- JP-A- 5 237 478
- JP-A- 6 206 076
- JP-A- H06 206 076
- JP-A- 2008 229 555
- JP-A- 2008 229 555
- JP-A- 2009 274 950
- JP-A- 2009 274 950

## Description

### FIELD OF THE INVENTION

A present invention relates to an apparatus and a method for producing an aqueous solution of hypochlorous acid. More particularly, the present invention relates to an apparatus and a method for producing an aqueous solution of hypochlorous acid without using acid and without generating chlorine gas substantially.

### BACKGROUND ART

Hypochlorous acid is known to have a bactericidal action. Therefore, a hypochlorous acid solution has been used in various kinds of fields and has been used for sterilization of tap water and foods.

The sterilization effect of hypochlorous acid is demonstrated by a molecular hypochlorous acid, which is generated by binding of hypochlorite ion and hydrogen ion in a reaction of hypochlorite such as sodium hypochlorite with water and acid.

When hypochlorous acid is used for the purpose of sterilization, it is generally known that hypochlorous acid in the undissociated molecular state has the highest sterilization effect. In addition, it is known that the sterilization effect of hypochlorite solution prepared from sodium hypochlorite and the like varies remarkably depending on the pH of the solution. Generally, hypochlorous acid is present as hypochlorite ion at alkaline pH and the sterilization effect is low. On the other hand, The sterilization effect of hypochlorous acid is also low at acidic pH and furthermore, chlorine gas is generated. It is considered that the abundance of molecular hypochlorous acid is usually high when the hypochlorous acid is approximately pH3.5-6.5.

On the other hand, an aqueous solution of sodium hypochlorite is prepared as alkaline solution. Furthermore, the pH is decreased to only around 8.5-9.5 even if the aqueous solution of sodium hypochlorite is diluted to 50-100 ppm which is the concentration generally used as an liquid sterilizing agent. Therefore, it is necessary to decrease the pH of the hypochlorous acid to the pH of high sterilization effect if it is used for the purpose of sterilization.

An electrolytic process and a two-liquid-method are known as a methods for decreasing the pH of the aqueous solution of sodium hypochlorite. However, the electrolytic process requires a device comprising an electrolytic cell and the maintenance cost is expensive. In addition, it requires electrodes and costs. Furthermore, only low-concentrated weakly acidic hypochlorous acid can be prepared by the electrolytic process. On the other hand, the two-liquid-method is a method for adjusting pH to acidic side by mixing an aqueous solution of sodium hypochlorite with hydrochloric acid. The pH is adjusted by acid such as hydrochloric acid in this method and therefore, the method includes a step of mixing sodium hypochlorite and acid, and causes a problem of safety. Particularly, chlorine gas is generated when sodium hypochlorite and hydrochloric acid are mixed, and it is extremely dangerous. As far as high concentration of the sodium hypochlorite and acid are used as materials, the production of weakly acidic hypochlorous acid remains dangerous. Therefore, even if it is understood that the sterilizing property is enhanced by decreasing the pH, the low pH cannot be applied easily because it is difficult to adjust the pH and chlorine gas is generated when the pH value is decreased excessively. Thus, a method for preparation without the risk of the generation of the chlorine gas is expected fundamentally.

Patent document 1 and Patent document 2 disclose a method using an ion exchange resin as a method using no hydrochloric acid in order to decrease a pH of an aqueous solution of sodium hypochlorite. The Patent document 1 discloses a method for decreasing a pH value of an aqueous solution of sodium hypochlorite using a solution of which pH is decreased by an ion exchange of liquid including a cation such as minerals by a hydrogen substituted ion-exchange resin, instead of hydrochloric acid. However, the generation of chlorine gas is not avoided by this method because the pH was decreased to the value at which chlorine gas would be generated after the obtained acid solution was mixed with the sodium hypochlorite. Particularly, it is described that the pH is decreased to 2.7 when an ion exchange is applied to the whole volume. Therefore, the method is complicated because it requires a step of mixing the acid solution with the sodium hypochlorite after the acid solution was obtained by the ion exchange.

In addition, the patent document 2 discloses a method for producing hypochlorous acid for the purpose of preparing hypochlorous acid which does not contain salts at all. In this method, at first, the solution of sodium hypochlorite is treated with the hydrogen-substituted ion exchange resin to substitute the hydrogen ion for the metal ion. Then, a step wherein the provided solution is treated with an anion exchange resin to substitute the hydroxyl ion for the chlorine ion is provided. Thus, this method is also complicated because it requires treating with two kinds of ion exchange resin, and the adjustment of the pH of hypochlorous acid is difficult. It is also disclosed that the sterilization effect is decreased since a liquid property becomes strongly acidic when the solution of sodium hypochlorite is treated with the hydrogen substituted ion exchange resin. Furthermore, the generation of the chlorine gas is not avoided.

As described above, an apparatus and a method for producing weakly acidic hypochlorous acid are expected without using acid and generating toxic chlorine gas substantially. Hypochlorous acid has safe and strong sterilization effect without generating chlorine gas, particularly when the pH is adjusted to around 3.5-7. Thus, an apparatus and a method for producing weakly acidic hypochlorous acid with such a pH easily and safely are expected.

### PRIOR ART DOCUMENT

### Patent Document

Patent document 1: Japanese Kokai Publication No. H06-206076
Patent document 2: Japanese Kokai Publication No. 2009-274950

### SUMMARY OF THE INVENTION

### Problem to be Solved by the Invention

Thus, the present invention is intended to provide an apparatus and a method for producing an aqueous solution of hypochlorous acid without using acid and without generating chlorine gas substantially.

### Means to Solve the Problem

The present invention provides a method for producing weakly acidic hypochlorous acid, comprising a step of treating hypochlorite solution with an acidic ion exchanger, wherein the pH of the weakly acidic hypochlorous acid after said treatment with the acidic ion exchanger is from 3.5 to 7.5, characterized in that the acidic ion exchanger is a weakly acidic ion exchanger having a carboxylic acid group (-COOH) as an exchange group and having buffer action at the pH value of from 3.5 to 7.5 which is more than that of generating chlorine gas.

Suitably, the hypochlorite solution is sodium hypochlorite or calcium hypochlorite solution.

Suitably, the ion exchanger has buffer action at the pH value of 4.0 to 7.0, and the pH of the weakly acidic hypochlorous acid after said treatment with the weakly acidic ion exchanger is from 4.0 to 7.0.

Suitably, the hypochlorite solution is 500 ppm or more.

The present invention may be implemented in an apparatus for producing weakly acidic hypochlorous acid comprising a hypochlorite solution and a weakly acidic ion exchanger having buffer action at the pH value of from 3.5 to 7.5.

Suitably, the apparatus further comprises a device for diluting the hypochlorite solution and a container filled with the weakly acidic ion exchanger.

Suitably, the apparatus for producing weakly acidic hypochlorous acid is suitable for use in sterilizing, and further comprises a means for spraying the weakly acidic hypochlorous acid.

### Effect of the Invention

According to the present invention, an aqueous solution of weakly acidic hypochlorous acid can be prepared without using acid and without decreasing to pH less than that of generating chlorine gas. Further, according to the present invention, a highly-concentrated aqueous solution of hypochlorous acid can be prepared. Furthermore, according to the present invention, a weakly acidic hypochlorous acid can be prepared which has lower bleaching effect than that of conventional weakly acidic hypochlorous acid, because the weakly acidic hypochlorous acid can be prepared without decreasing the pH to the pH less than that of generating chlorine gas as the conventional method for preparation. Further, according to the present invention, mineralization by mineral components derived from hypochlorite solution like a conventional apparatus can be prevented.

### BRIEF DESCRIPTION OF DRAWINGS

FIG. 1 is a figure indicating an example of the container including calcium hypochlorite and the weakly acidic ion exchanger.
FIG. 2 is a schematic illustration indicating an example of the apparatus of the present invention.
FIG. 3 is a schematic illustration indicating an example of the apparatus of the present invention.

### EMBODIMENT FOR CARRYING OUT THE INVENTION

The present inventors found that an aqueous solution of weakly acidic hypochlorous acid around pH 3.5-7.5 could be obtained without generating chlorine gas substantially by treating an alkaline sodium hypochlorite solution with a weakly acidic ion exchanger.

As used herein, "pH more than that of generating chlorine gas" refers to the range of the pH at which chlorine gas is not generated substantially when the pH of the hypochlorite solution is decreased. In addition, as used herain, "weakly acidic" includes the range of the pH at which chlorine gas is not generated substantially when the pH of the alkaline hypochlorite solution is decreased. For example, "weakly acidic" refers to the range from subacidic to neutral, and the range of the pH value of approximately 3.5-7.5, particularly the range of 4.0-7.0. "chlorine gas is not generated substantially" refers to that the chlorine gas is not generated substantially at the level which is dangerous to the living body, that the generation of an air bubble of the chlorine from solution cannot be confirmed substantially when the pH of the hypochlorite solution is decreased, or that the bleaching action by chlorine is not confirmed substantially when the pH of the hypochlorite solution is decreased. It is generally considered that chlorine gas is not generated at pH4.0 substantially and it may not be generated at around pH3.5 or higher in the field of the invention. Thus, the pH of generating chlorine gas includes the range of such pH or less.

The method for producing weakly acidic hypochlorous acid of the present invention is explained in detail hereinafter. The method for producing weakly acidic hypochlorous acid of the present invention includes a step of treating a hypochlorite solution with a weakly acidic ion exchanger. As used herein, the hypochlorite solution refers to the solution including a salt of any hypochlorous acid such as sodium hypochlorite (NaClO), potassium hypochlorite (KCIO) and calcium hypochlorite (Ca(ClO)₂), as generally recognized by a person of ordinary skill in the art. A commercially available material or a material prepared by the method well known to those skilled in the art can be used as hypochlorite. In addition, the solution can be made within any solution such as water. It can be also a solution within a buffer. Furthermore, any additives can be included in the hypochlorite solution. For example, any weak acid salt such as sodium hydrogen carbonate and calcium lactate can be included in the hypochlorite solution. The hypochlorite solution can be adjusted to the pH at which the sterilization activity is higher by including such an additive.

In the present invention, the hypochlorite solution with any concentration can be used. For example, a commercially available 12% of sodium hypochlorite solution can be diluted to use at the concentration of 10-120,000 ppm or more, for example 100, 200, 500, 1000, 10000 and 120,000 ppm. According to the method of the present invention, weakly acidic hypochlorous acid with the concentration that cannot be prepared by conventional method such as 10,000 ppm can be prepared. The weakly acidic hypochlorous acid with the concentration of 50-1000 ppm, which is the concentration used for the purpose of sterilization actually, can be also prepared directly.

In addition, the hypochlorite solution can be prepared when the method of the present invention is carried out. Solid salt can be also used, as well as salt prepared as solution like sodium hypochlorite. For example, the hypochlorite solution can be prepared by adding solid such as calcium hypochlorite to water.

In the method of the present invention, a weakly acidic ion exchanger having buffer action at the pH value of 3.5 to 7.5 and more than that of generating chlorine gas is used. The weakly acidic ion exchanger has a carboxylic acid group (-COOH) as an exchange group. In addition, the weakly acidic ion exchanger can exchange salt of base such as NaOH and weak acid such as NaHCO₃. In the method of the present invention, any weakly acidic ion exchanger which is well known to those skilled in the art can be used as the weakly acidic ion exchanger. The weakly acidic ion exchanger can be a weakly acidic ion exchange resin such as methacrylic acid type weakly acidic cation-exchange resin and acrylic acid type weakly acidic cation-exchange resin. For example, it can be a weakly acidic ion exchange resin which is well known to those skilled in the art such as Amberlite® IRC-76 (ORGANO CORPORATION).

In addition, the weakly acidic ion exchanger as used herein has buffer action in the range of the pH value of 3.5-7.5, particularly the range of 4.0-7.0. Thus, according to the method of the present invention, the pH of the solution after treated with the weakly acidic ion exchanger is in the range of pH3.5-7.5, for example pH4.0-6.5. Therefore, there is no likelihood to generate chlorine gas, and the sterilization effect is strong. In addition, pH is not decreased to the pH less than that of generating chlorine gas even partially, since the ion exchanger having such a buffer action adsorbs excessive hydrogen ion while releasing sodium ion or calcium ion which has been adsorbed. Then, in the reaction of hypochlorite solution and an ion exchanger having buffer action, the effect of decreasing the pH is achieved by the ion exchanger. Thus, the weakly acidic ion exchanger as used herein does not decrease the pH of the hypochlorite solution to the pH less than that of generating chlorine gas either temporarily or partially. When the pH of the hypochlorite solution is decreased by using acid such as hydrochloric acid like a conventional method for producing hypochlorous acid, it is considered that the pH of the solution will fall down to the pH generating chlorine gas temporarily or locally in the process of mixing, and chlorine gas will be generated since the acid which has the pH generating chlorine gas and the hypochlorite solution are mixed. However, chlorine gas is not generated when the weakly acidic ion exchanger is used like the present invention. In addition, the weakly acidic ion exchanger as used herein will not have an influence on a neutral salt.

Furthermore, the weakly acidic ion exchanger can be used in any amount in the method of the present invention. A person of ordinary skill in the art may adjust the amount of the weakly acidic ion exchanger depending on the prepared concentration and amount of the weakly acidic hypochlorous acid. The method of the present invention is significantly safety because the pH of the produced weakly acidic hypochlorous acid is not too low even if excessive weakly acidic ion exchanger is used to treat the hypochlorite solution.

As described above, the pH can be maintained constantly even if excessive weakly acidic ion exchanger is used in the method of the present invention. Therefore, the pH can be stably maintained for a long time by leaving the weakly acidic ion exchanger in the solution of the weakly acidic hypochlorous acid without removing it after decreased the pH of the hypochlorite solution by the method of the present invention.

In addition, the weakly acidic ion exchanger has the property of adsorbing mineral components such as calcium and magnesium in a solution. Therefore, mineralization derived from the mineral component generated in the apparatus can be prevented by leaving the weakly acidic ion exchanger in the solution of the weakly acidic hypochlorous acid without removing it after decreased the pH of the hypochlorite solution by the method of the present invention.

In order to prevent mineralization, for example, when the hypochlorite solution which decreased pH by the method of the present invention is sprayed using spraying device such as a humidifier, the weakly acidic ion exchanger can be comprised in the device. As described above, the spraying device comprising the weakly acidic ion exchanger can prevent mineralization in the device derived from calcium and magnesium included in the solution and mineralization derived from the atomized drop of water. In addition, if a weakly acidic hypochlorous acid solution is diluted to the appropriate concentration with water or the like at the time of use, the pH of the hypochlorite solution after dilution may be change depending on the pH of the water to dilute. However, according to the spraying device comprising the weakly acidic ion exchanger, the pH of the hypochlorite solution after dilution can be maintained to the appropriate pH by pH buffer action of the weakly acidic ion exchanger. Therefore, the pH of the hypochlorite solution after dilution can be maintained to the pH at which sterilization effect is strong by using the spraying device comprising such a weakly acidic ion exchanger.

On the other hand, as for strength of adsorption of the weakly acidic cation-exchange resin to various ions, the higher the valence of the ion, the higher the selectivity generally, and it is characteristic that the selectivity to the hydrogen ion is significantly high. Therefore, the R-COOH type can be reproduced easily using an agent such as hydrochloric acid or an aqueous solution of sulfuric acid after the hydrogen ion is exchanged with other cation. Therefore, the reproduction is easy when it is used repeatedly, and the reproduction is made possible by the agent with amount slightly more than the theoretical chemical equivalent.

In addition, it is considered that bleaching by sodium hypochlorite depends on chlorinating reaction by dissolved chlorine. In addition, it is considered that order of strength of the bleaching is the following: dissolved chlorine > sodium hypochlorite > hypochlorous acid. According to the method of the present invention, a weakly acidic hypochlorous acid with low bleaching effect can be obtained because the weakly acidic hypochlorous acid can be prepared without generating dissolved chlorine substantially. In addition, the chlorinating reaction does not occur because dissolved chlorine is not generated substantially as above. Bad smell caused by chlorine is very strong when much dissolved chlorine is included, however, according to the method of the present invention, the bad smell is little because weakly acidic hypochlorous acid can be prepared without generating dissolved chlorine substantially.

In contrast, when the sodium hypochlorite solution is treated by using strongly acidic cation resin, the pH of the solution after treatment is 3 or less. Therefore, the sterilization effect is decreased, and furthermore chlorine gas is generated.

Treatment of hypochlorite solution with the weakly acidic ion exchanger can be carried out by any method. For example, it can be treated by passing the hypochlorite solution through a column filled with the weakly acidic ion exchanger. In addition, it can be treated, using a batch method, by adding the weakly acidic ion exchanger to a container including the hypochlorite solution. Furthermore, the weakly acidic ion exchanger can be packed in any bag like a tea bag and be immersed in the hypochlorite solution. According to the method of the present invention, the weakly acidic hypochlorous acid having high sterilization effect can be obtained easily only by treating the hypochlorite solution with the weakly acidic ion exchanger.

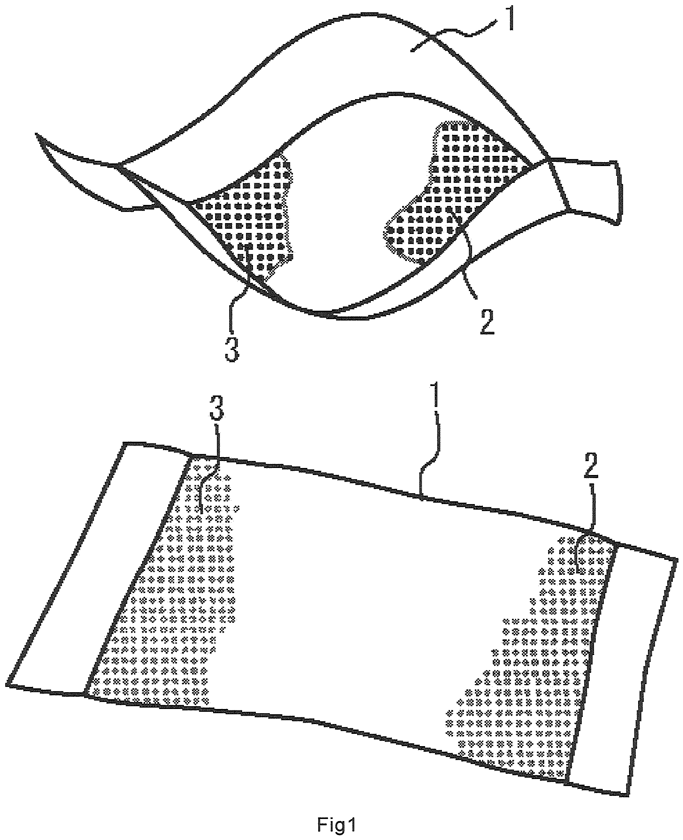

Furthermore, a bag including both solid hypochlorous acid such as calcium hypochlorite and a weakly acidic ion exchanger can be used. For example, a bag made of nonwoven fabrics including both calcium hypochlorite and a weakly acidic ion exchanger can be used to obtain a weakly acidic hypochlorous acid. FIG. 1 indicates an example of the container including calcium hypochlorite and the weakly acidic ion exchanger beforehand. The upper section of FIG. 1 indicates the schematic diagram when calcium hypochlorite and the weakly acidic ion exchanger are added in the nonwoven fabric. In addition, the lower section of FIG. 1 indicates the schematic diagram when the opening of the figure shown in the upper section is closed. Calcium hypochlorite and the weakly acidic ion exchanger are sealed inside the nonwoven fabric. Any materials can be used for the container. The weakly acidic hypochlorous acid can be obtained only by immersing the container in water because calcium hypochlorite and the weakly acidic ion exchanger are included in the container such as the nonwoven fabric which can pass through water. The container may not be materials which allow water to pass through it. If the container has the form which allow water to enter into it, calcium hypochlorite and the weakly acidic ion exchanger can be contact to obtain the weakly acidic hypochlorous acid by simply immersing in water. Alternatively, at the time of use, calcium hypochlorite and the weakly acidic ion exchanger can be taken out of the container and added into water. Such bag including both the solid hypochlorous acid such as calcium hypochlorite and the weakly acidic ion exchanger can be prepared and stored as solid prior to use, not solution, because it includes only the solid calcium hypochlorite and the weakly acidic ion exchanger. As for the solid calcium hypochlorite, those of any shape can be used. For example, the granule and the powder can be used.

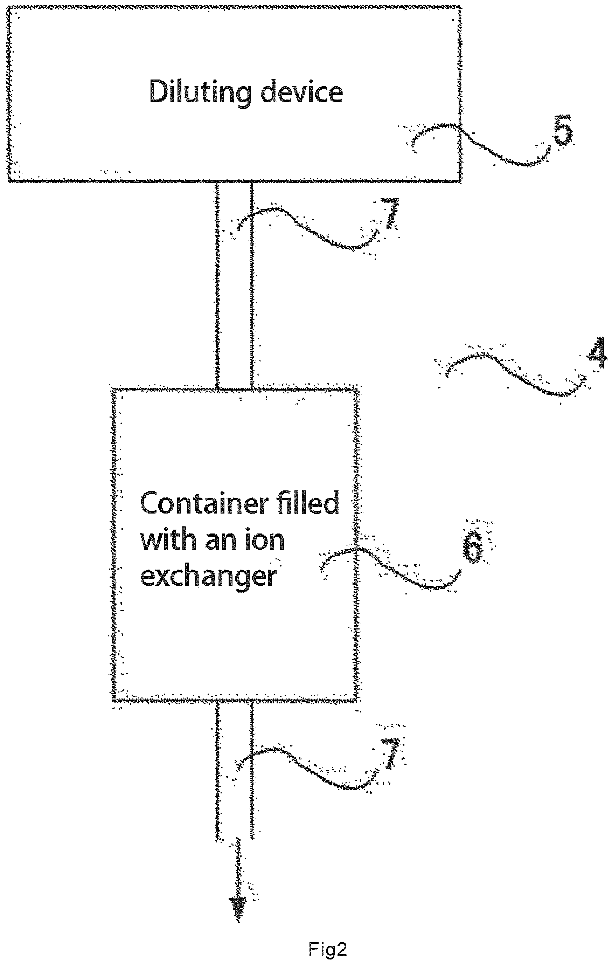

Then, an apparatus for producing weakly acidic hypochlorous acid by the method of of the present invention is described in detail. The apparatus comprises a weakly acidic ion exchanger. For example, the apparatus can be the apparatus as shown in FIG. 2. The apparatus illustrated in FIG. 2 comprises the diluting device 5 to retain and dilute a hypochlorite solution. The diluting device 5 is connected to the container 6 filled with an ion exchanger such as a column filled with an ion exchange resin. For example, the diluting device 5 comprises a pump to introduce the hypochlorite solution in the diluting device into the container 6 filled with the ion exchanger which was filled with the weakly acidic ion exchanger and is connected to the container 6 filled with the ion exchanger via the pump. The hypochlorite solution is introduced from the diluting device to the ion-exchange column by the pump and treated with the weakly acidic ion exchanger, and weakly acidic hypochlorous acid can be obtained.

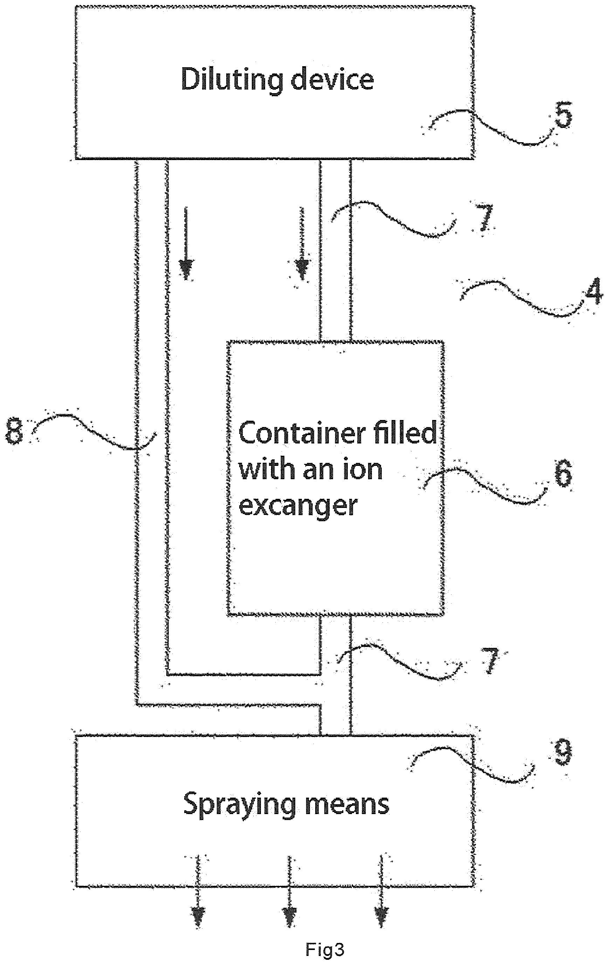

Alternatively, for example, an apparatus for implementing the present invention can be the apparatus as illustrated in FIG. 3. The apparatus shown in FIG. 3 comprises the duct 7 connected from the diluting device for the hypochlorite solution to the container 6 filled with the weakly acidic ion exchanger and the duct 8 which is not connected to container 6 filled with the weakly acidic ion exchanger. It can be also constituted to be able to adjust flow rate of respective ducts. For example, the mixing ratio of the solutions passing through respective ducts can be adjusted by providing a throttle valve or an on-off valve to the duct 7 and the duct 8. The weakly acidic hypochlorous acid solution after the ion exchange and the hypochlorite solution before ion exchange can be mixed with an optional amount by adopting such constitution of the apparatus. For example, when the solution of neutral pH 7 is prepared, the solution of pH 6 can be obtained by mixing the sodium hypochlorite solution before ion exchange (e.g., pH12) at an appropriate amount, if the weakly acidic hypochlorous acid solution after ion exchange has pH 5.

Alternatively, the apparatus for implementing the present invention can further comprise the spraying means 9 to spray the weakly acidic hypochlorous acid which passed through the column of the weakly acidic ion exchanger as shown in FIG. 3. Thus, the weakly acidic hypochlorous acid having sterilization effect can be diffused in the air by comprising the spraying means. For example, the apparatus comprising such spraying means can be incorporated into the devices such as an air cleaner and an air conditioner and used as a sterilizer. Any device which is well known to those skilled in the art can be used as the spraying device. For example, the spraying device using supersonic wave can be used.

As described above, the weakly acidic ion exchanger has also a property to adsorb mineral components such as calcium and magnesium in a solution. Therefore, mineralization derived from mineral components generated in an apparatus can be prevented in the apparatus of the present invention by making the condition of contacting the weakly acidic hypochlorous acid solution with the weakly acidic ion exchanger. For example, in the spraying means 9 of the apparatus as shown in FIG. 3, the weakly acidic hypochlorous acid solution will be atomized and circulated inside the spraying means 9. At this time, mineral components in the weakly acidic hypochlorous acid solution can be adsorbed by comprising the weakly acidic ion exchanger inside the spraying means 9. Therefore, mineralization by mineral components in the apparatus can be prevented and the trouble of the apparatus can be also prevented. In addition, pH of the weakly acidic hypochlorous acid solution can be stabilized.

As described above, according to the method for producing a weakly acidic hypochlorous acid of the present invention, the weakly acidic hypochlorous acid can be obtained easily without decreasing the pH to the range of generating chlorine gas. In addition, according to the method for producing a weakly acidic hypochlorous acid of the present invention, the highly-concentrated weakly acidic hypochlorous acid of 500ppm or more can be obtained as shown in the following examples. Furthermore, bleaching activity of the weakly acidic hypochlorous acid provided by the method and the apparatus for producing a weakly acidic hypochlorous acid of the present invention is lower than that of a conventional weakly acidic hypochlorous acid as shown in the following examples.

### EXAMPLE

### (1. Materials and method)

The following materials were used for a experiment unless otherwise specified. Amberlite® IRC-76 (ORGANO CORPORATION) was used as a weakly acidic ion exchange resin. 500 ml of the weakly acidic ion exchange resin was filled up to a column with 1 liter to use. As a sodium hypochlorite solution, the commercially available 12% of sodium hypochlorite solution (Tsuruchlone Super, TSURUMI SODA Co., LTD.) was used, which was diluted or was not diluted. As calcium hypochlorite, the commercially available granule (TOSOH CORPORATION) was used. As sodium bicarbonate, the commercially available sodium bicarbonate (Takasugi Pharmaceutical Co., Ltd.) was used. As calcium lactate, the commercially available calcium lactate (Naitoh Shouten Co., Ltd.) was used.

An apparatus with a pump connected to a column of a weakly acidic ion exchange resin was used to treat a sodium hypochlorite solution with the weakly acidic ion exchange resin. The sodium hypochlorite solution was introduced into the column of the weakly acidic ion exchange resin using the pump with predetermined water flow so that the sodium hypochlorite solution of a reservoir passed through the weakly acidic ion exchange resin at desired concentration. Tap water of pH7.5 was used for dilution.

pH of a solution was measured using the portable pH meter HM-30P (DKK-TOA CORPORATION) or a pH test paper. Concentration of hypochlorous acid was measured as a concentration of free excess chlorine using Aqua Check® HC (Nissan Chemical Industries, Ltd.).

### (2. pH measurement of weakly acidic hypochlorous acid)

The 12% of sodium hypochlorite solution was diluted with water to the concentration of 200 ppm, and pH of the solution was measured after passed through the column of the weakly acidic ion exchange resin. The water flow passing through the resin was 2.3 liters per minute. As for the sodium hypochlorite solution, when it was introduced into the column, the concentration was approximately 150-200 ppm and the pH was 8.7. As for the weakly acidic hypochlorous acid after passed through the weakly acidic ion exchange resin, the concentration was approximately 150-200 ppm and the pH was 6.1-7.4. The part of the results are indicated in the following Table 1.

**TABLE 1**

| | pH | Concentration ppm |
|---|---|---|
| Diluted solution | 8.7 | approximately 150 |
| Solution generated through resin | 6.1-6.3 | approximately 150 |

The 12% of the sodium hypochlorite solution was diluted with water to the concentration of 100 ppm, and pH of the solution was measured after passed through the column of the weakly acidic ion exchange resin. The water flow passing through the resin was 2.3 liters per minute. As for the sodium hypochlorite solution when it was introduced into the column, the concentration was approximately 100 ppm and the pH was 8.5-8.9. As for the weakly acidic hypochlorous acid after passed through the weakly acidic ion exchange resin, the concentration was approximately 100 ppm and the pH was 6.0-6.3. The part of the results are indicated in the following Table 2.

**TABLE 2**

| The first | pH | Concentration ppm | The second | pH | Concentration ppm |
|---|---|---|---|---|---|
| Diluted solution | 8.5 | 100 | Diluted solution | 8.9 | 100 |
| Solution generated through resin | 6.0-6.3 | Approximately 100 | Solution generated through resin | 6.0-6.3 | 100 |

The 12% of the sodium hypochlorite solution was diluted with water to the concentration of 500 ppm, and pH of the solution was measured after having passed through the column of the weakly acidic ion exchange resin. The water flow passing through the resin was 2.3 liters per minute. As shown in following Table 3, the pH of the sodium hypochlorite solution when it was introduced into the column was 9.1-9.2. The pH of the weakly acidic hypochlorous acid after passed through the weakly acidic ion exchange resin was 6.1.

**TABLE 3**

| | pH | Concentration ppm |
|---|---|---|
| Diluted solution | 9.1-9.2 | approximately 500 |
| Solution generated through resin | 6.1 | approximately 500 |

The 12% of the sodium hypochlorite solution was diluted with water to the concentration of 10,000 ppm, and pH of the solution was measured after passed through the column with the weakly acidic ion exchange resin. The water flow passing through the resin was 2.3 liters per minute. As shown in following Table 4, the pH of the sodium hypochlorite solution when it was introduced into the column was 11.4-11.9. The pH of the weakly acidic hypochlorous acid after passed through the weakly acidic ion exchange resin was 7.1.

**TABLE 4**

| Concentration of diluted solution | pH | pH after passed through resin |
|---|---|---|
| 10,000 ppm | 11.4-11.9 | 7.1 |

The weakly acidic hypochlorous acid provided from the sodium hypochlorite solution of the concentration of 10,000 ppm by the above step was further passed the resin. The pH of the sodium hypochlorite solution was 7.2 when it was introduced into the column as shown in following Table 5. The pH of the weakly acidic hypochlorous acid after passed through the weakly acidic ion exchange resin was 5.8-6.5.

**TABLE 5**

| pH value | pH value after passed through the resin | Passing through the resin |
|---|---|---|
| 7.2 | 6.4-6.5 | the second |
| 7.2 | 5.8-5.9 | the second |

According to the method and the apparatus of the present invention, the weakly acidic hypochlorous acid in the range of pH5.8-6.5 having antimicrobial effect was able to be prepared even if it is extremely high concentration such as 10,000 ppm. Such a highly-concentrated weakly acidic hypochlorous acid cannot be prepared by the conventional method for preparation. In addition, pH did not decrease to the pH generating chlorine gas in both of the above experiments.

Then, a weakly acidic hypochlorous acid was obtained from a sodium hypochlorite solution with the concentration of 200 ppm using acrylic-based DIAION (registered trademark) WK40L (Mitsubishi Chemical Corporation) as a weakly acidic ion exchange resin. This weakly acidic ion exchange resin has buffer action around pH5.0.

The 12% of the sodium hypochlorite solution was diluted with water to the concentration of 200 ppm, and pH of the solution was measured after passed through the column of the weakly acidic ion exchange resin. The water flow passing through the resin was 2.3 liters per minute. As for the sodium hypochlorite solution when it was introduced into the column, the concentration was 200 ppm and the pH was 8.7. As for the weakly acidic hypochlorous acid after passed through the weakly acidic ion exchange resin, the concentration was 200 ppm and the pH was 4.9. The weakly acidic hypochlorous acid of pH6.0 was able to be obtained by mixing the provided weakly acidic hypochlorous acid of pH4.9 with the sodium hypochlorite solution of pH8.7 which did not pass through the resin yet.

### (3. pH measurement of sodium hypochlorite solution including sodium hydrogen carbonate)

One teaspoon of the sodium hydrogen carbonate (approximately 5 g) was added to 100 ml of the 12% of sodium hypochlorite solution and mixed. At this time, it was confirmed that the solution was saturated because undissolved sodium hydrogen carbonate remained. A sodium hydrogen carbonate-saturated sodium hypochlorite solution with the concentration of 200 ppm was prepared by diluting this solution and the pH after passed through the column of the weakly acidic ion exchange resin was measured. The water flow passing through the resin was 2.3 liters per minute. As shown in following Table 6, as for the sodium hypochlorite solution when it was introduced into the column, the concentration was approximately 200 ppm and the pH was 8.8-8.9. As for the weakly acidic hypochlorous acid after passed through the weakly acidic ion exchange resin, the concentration was approximately 200 ppm and the pH was 5.8-6.1.

**TABLE 6**

| The first | pH | Concentration ppm | The second | pH | Concentration ppm |
|---|---|---|---|---|---|
| Diluted solution | 8.9 | 200< | Diluted solution | 8.8 | 200 |
| Solution generated by resin | 5.8-6.0 | 200< | Solution generated by resin | 5.9-6.1 | 200 |

### (4. Reaction of calcium hypochlorite and weakly acidic ion exchange resin)

The following three experiments were carried out.
1. 0.03 g of calcium hypochlorite of granule was put in a bag made of a nonwoven fabric and the bag was put in 100 ml of purified water. The concentration of free residual chlorine was approximately 200 ppm and the pH was 8.6.
2. 0.03 g of calcium hypochlorite of granule and 0.6 g of weakly acidic ion exchange resin were put in a bag made of a nonwoven fabric and the bag was put in 100 ml of purified water. The concentration of free residual chlorine was approximately 200 ppm and the pH was 7.3.
3. 0.03 g of calcium hypochlorite of granule, 0.6 g of weakly acidic ion exchange resin and 0.6 g of calcium lactate were put in a bag made of a nonwoven fabric and the bag was put in 100 ml of purified water. The concentration of free residual chlorine was approximately 200 ppm and the pH was 5.2.

As described above, a weakly acidic hypochlorous acid with pH5.2-7.3 was able to be obtained easily by reacting calcium hypochlorite and a weakly acidic ion exchange resin. In addition, a weakly acidic hypochlorous acid can be obtained without considering the ratio of formulations for the chemical reaction in order to adjust pH of the solution of calcium hypochlorite by using the weakly acidic ion exchange resin.

### (5. Bleaching activity of weakly acidic hypochlorous acid by the present invention)

It was examined whether the weakly acidic hypochlorous acid provided by the method of the present invention had bleaching effect. The thread of the colored cotton was bleached when it was dipped into the solution prepared by diluting the 12% of sodium hypochlorite solution to the concentration 500 ppm and 1,000 ppm. On the other hand, the thread of the colored cotton was dipped into the weakly acidic hypochlorous acid with the concentration 500 ppm and 1,000 ppm provided by the above experiments and stand for one day. The cloth was hard to be bleached even after one day.

According to the present invention, an aqueous solution of hypochlorous acid can be prepared without using acid and generating chlorine gas.

### DENOTATION OF REFERENCE NUMERALS

1 : Nonwoven fabric
2 : Calcium hypochlorite
3 : Weakly acidic ion exchange resin
4 : Apparatus for producing weakly acidic hypochlorous acid
5 : Diluting device
6 : Container filled with ion exchanger
7 : Duct
8 : Duct
9 : Spraying means

## Claims

1. A method for producing weakly acidic hypochlorous acid, comprising a step of treating hypochlorite solution with an acidic ion exchanger wherein the pH of the weakly acidic hypochlorous acid after said treatment with the acidic ion exchanger is from 3.5 to 7.5,
**characterized in that** the acidic ion exchanger is a weakly acidic ion exchanger having a carboxylic acid group (-COOH) as an exchange group and having buffer action at the pH value of from 3.5 to 7.5 which is more than that of generating chlorine gas.

2. The method for producing weakly acidic hypochlorous acid according to claim 1, wherein the hypochlorous acid is sodium hypochlorite or calcium hypochlorite.

3. The method for producing weakly acidic hypochlorous acid according to claim 1, wherein the ion exchanger has buffer action at the pH value of 4.0 to 7.0, and the pH of the weakly acidic hypochlorous acid after treatment with the weakly acidic ion exchanger is from 4.0 to 6.5.

4. The method for producing weakly acidic hypochlorous acid according to claim 1, wherein the hypochlorite solution is 500 ppm or more.

## Patentansprüche

1. Verfahren zur Herstellung von schwach saurer Hypochlorsäure, umfassend einen Schritt zur Behandlung von Hypochloritlösung mit einem sauren Ionenaustauscher, wobei der pH-Wert der schwach sauren Hypochlorsäure nach der Behandlung mit dem sauren Ionenaustauscher 3,5 bis 7,5 beträgt,
**dadurch gekennzeichnet, dass** der saure Ionenaustauscher ein schwach saurer Ionenaustauscher mit einer Carbonsäuregruppe (-COOH) als Austauschgruppe ist und eine Pufferwirkung bei einem pH-Wert von 3,5 bis 7,5 aufweist, die mehr als der von der Erzeugung von Chlorgas ist.

2. Verfahren zur Herstellung von schwach saurer Hypochlorsäure nach Anspruch 1, wobei die Hypochlorsäure Natriumhypochlorit oder Calciumhypochlorit ist.

3. Verfahren zur Herstellung von schwach saurer Hypochlorsäure nach Anspruch 1, wobei der Ionenaustauscher eine Pufferwirkung beim pH-Wert von 4,0 bis 7,0 aufweist und der pH-Wert der schwach sauren Hypochlorsäure nach der Behandlung mit dem schwach sauren Ionenaustauscher von 4,0 bis 6,5 beträgt.

4. Verfahren zur Herstellung von schwach saurer Hypochlorsäure nach Anspruch 1, wobei die Hypochloritlösung 500 ppm oder mehr beträgt.

## Revendications

1. Procédé de production d'acide hypochloreux faiblement acide, comprenant une étape de traitement d'une solution d'hypochlorite avec un échangeur d'ions acide dans lequel le pH de l'acide hypochloreux faiblement acide après ledit traitement avec l'échangeur d'ions acides est de 3,5 à 7,5, **caractérisé en ce que** l'échangeur d'ions acides est un échangeur d'ions faiblement acides présentant un groupe acide carboxylique (-COOH) comme groupe d'échange et présentant une action tampon à la valeur de pH de 3,5 à 7,5 qui est supérieure à celle générant le chlore gazeux.

2. Procédé de production d'acide hypochloreux faiblement acide selon la revendication 1, dans lequel l'acide hypochloreux est l'hypochlorite de sodium ou l'hypochlorite de calcium.

3. Procédé de production d'acide hypochloreux faiblement acide selon la revendication 1, dans lequel l'échangeur d'ions acides présente une action tampon à la valeur de pH de 4,0 à 7,0, et le pH de l'acide hypochloreux faiblement acide après traitement avec l'échangeur d'ions faiblement acides est de 4,0 à 6,5.

4. Procédé de production d'acide hypochloreux faiblement acide selon la revendication 1, dans lequel la solution d'hypochlorite est à 500 ppm ou plus.
